# EUROPEAN PATENT APPLICATION

(11) **EP 1 326 201 A1**
(43) Date of publication of application: **09.07.2003**
(21) Application number: 01830835.3
(22) Date of filing: 31.12.2001
(51) Int. Cl.: G06K 19/07

(54) **Personal navigation system for the public transport network**

(71) Applicant: Di Capua, Flavio, 80053 Castellammare Di Stabia (IT)
(72) Inventor: Di Capua, Flavio, 80053 Castellammare Di Stabia (IT)

(57) **Abstract**

A system for a navigation on the network of public transport means, including a Data Processing Centre, including data processing means and signal receiving/transmitting means; a multiplicity of personal use devices or *Free-ways,* including signal receiving/transmitting means; control means, equipped with data memory means; means for visualizing messages; means for inletting input data by the user, and energetic autonomy means; a multiplicity of Position Sensors, including signal receiving/transmitting means; control means, equipped with data memory means; electric power supply means, intended to the sensing of the spatiotemporal position of a user of the network of public transport means; the Data Processing Centre including memory means which have stored therein a representation of the network of public transport means and of the time tables of public transport means that service it, and the data processing means thereof being programmed to process path information; each *Free-way* having stored in said memory means thereof a User Identification Code that identifies it univocally; each Position Sensor having stored in the memory means thereof a spatial position piece of information, and being endowed with a calendar clock providing a temporal position piece of information.

## Description

This invention relates to a system for a navigation on the public transport network.

It also relates to a system for a navigation on the public transport network, extended to further operate as a service or event fruition debiting system.

The user of a network of public transports and eventually of services and events will be shortly referred to as 'the user' hereinafter.

By '(public) transport means' any travel means for public collective use, as tipically urban or extraurban buses, but also trains and ferry-boats, and airliners are, will be meant hereinafter.

To be able to move in a town or between a town or a locality and another one in a national or international land, it is necessary to set a path served by a transport means or a plurality of transport means in succession, based on connections of stops of such transport means in the same place or in sites which are close to each other for a user on foot. The path is set based on the looking up of information means, e.g. printed matter, that disclose the paths and stops e.g. of buses in a town. For instance, for trains timetable sheets provide railway connections, with the relevant hours, between a place and another one.

Notwithstanding such information means are easily accessed, the user anyhow has to look up them in advance. It is, on the other side, inconvenient, where still possible, for the user to have to bring them on him/herself in a travel. Moreover, path information could be necessary in an unexpected way, then with the user not provided with path information means.

Path information is defined herein that information which turns out to be useful for the user to move from a place to another one, such as: path options and road state of paths from a departure point to an arrival point; bookings; anticipated knowledge of intermodal switching options (where an interrelation among transport systems occurs, such as e.g. connections between trains and other transport means); knowledge of the overall path cost associated with the various path options; acquisition of information about eventual travelling facilities, such as e.g. promotions, discounts, scales of rates, etc.

Therefore, a need remains for a means which allows a path to be found from a place to another one, which is portable and which can be interrogated always and anywhere.

It is the object of this invention to satisfy such a need.

To attain such an object, this invention provides a system for a navigation on the public transport network, including in combination:
- a Data Processing Centre, including data processing means and means for receiving/transmitting signals;
- a multiplicity of personal use devices or *Free*-ways, including means for receiving/transmitting signals; control means, equipped with data storing means; means for displaying messages; means for inputting data on the part of a user of the system, and energy autonomy means;
- a multiplicity of Position Sensors, including means for receiving/transmitting signals; control means, equipped with data storing means; means for feeding power supply; intended to the sensing of the spatiotemporal position of a user on the public transport network;
- said Data Processing Centre including storing means which store a representation of the public transport network and the timetables of the public transport means that serve it, and said data processing means thereof being programmed to process path information;
- each one of said *Free-ways* storing, in said storing means thereof, a User Identification Code which identifies it univocally;
- each one of said Position Sensors storing in said storing means thereof space position information, and being endowed with calendar-clock means providing time position information.

Moreover, a problem which arises when using public transport means is that of purchasing travel tickets. On a part, these ones can be not easily found close to a stop, or the user can find him/herself without small change to purchase them at an automatic dispenser.

Therefore, there is a need for a means that allows the transport service payment by electronic money.

It is also an object of this invention to satisfy such a need.

Together with such an object this invention has also the object of providing means for a payment with electronic money of services or events.

This invention attains such objects by means of a system as set forth above, wherein further said data processing means of said Data Processing Centre are further programmed for computing and debiting travel or service costs.

This invention, moreover, envisages to endow *Free-ways* and Position Sensors with complementary means for obliterating a *Free-way* at the passing through a Position Sensor.

Moreover, this invention envisages to provide check means, including means for checking the obliteration of *Free-ways.*

This invention takes also its steps from considering the large development and spreading of cellular mobile phones, to suggest cellular phones as energetically autonomous transmitting/receiving means particularly preferred for the fruition of the system taught by it. This invention, therefore, also teaches a cellular phone including, in functional communication therewith, *Free-way* control means, and means for accessing and using a *Free-way* function, managed by said control means.

It also provides a circuit board including *Free-way* control means and means for the functional connection to a cellular phone.

The advantages of the system of this invention consist in:
- the use flexibility thereof, the *Free-way* being not tied to any rigid site liable to the formation of a slowly-serviced queue, such as ticket offices, paper ticket obliteration machines, magnetic reading terminals for diminishing-credit prepaid cards;
- the precision and the saving for the user, as the DPC carries out the computation of the travel cost based on the actually covered distances and on the times actually spent, without excess approximation;
- the possibility of visualizing on the display of the *Free-way* advertising messages (e.g. -COCA COLA WISHES A GOOD TRAVEL-), interspersing them in utility pieces of information;
- the flexibility of the scales of rates; in view of the fact that the characteristics of precision and punctuality in the sensing and computation of the effected displacements, the system of this invention lends itself to promotion strategies and generally for promoting the use of public transport means (such as, in some particular circumstances, as in the case of days against smog, of a larger tourist crowding, or when it is otherwise desired to promote the use of public transport means), particularly to target-tailored offers (such as, by visualizing messages like: -IF YOU COME TO ANTONELLO VENDITTI'S CONCERT BY TRAIN YOU WILL HAVE A DISCOUNT OF 20% ON THE ADMITTANCE TICKET-) . In fact, the *Free-way* takes eventual changes made to the scales of rates for the users without any trouble;
- the greatest freedom of movement, in that by the *Free-way* it is possible to move without limits tied to the use of cash currency, when passing from a transport mode to another one, wherefor it would be fundamental to endow oneself with different travel titles, etc.;
- a commercial versatility of the *Free-way,* which, being an independent device, can be commercialized in a multiplicity of ways, such as sold, hired, given in use commodate, eventually offered as a title free of charge, etc.

This invention will be fully understood based on the following detailed description, only given as a matter of example, absolutely not of restriction, reference being made to the annexed drawings, wherein:
- FIGURE 1 is a concept general block diagram of the system of this invention;
- FIGURE 2 is a block diagram which illustrates an embodiment of this invention in which there is an additional mass storage, and the flow of the operating stages thereof;
- FIGURE 3 is a block diagram of a *Free-way*, and
- FIGURE 4 is a block diagram of a Position Sensor.

### 1. Base Constitution of the System

### 1.1. General Architecture

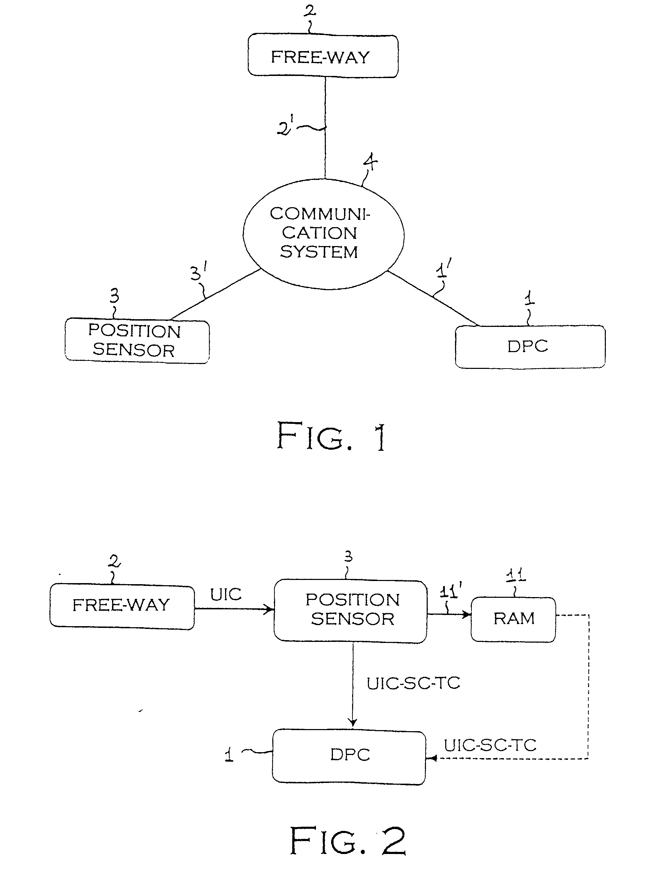

The system of this invention includes, as shown in FIGURE 1, three fundamental constituting elements, intended to interact therebetween. They are:
a) a Data Processing Centre 1 (referred to with acronym DPC hereinafter) . This one includes data processing means able to process path information, as defined above, for the user; as well as able to compute and automatically debit travel and service costs;
b) a multiplicity of devices for personal use 2, one for each user, making a navigator on the network of public transports, and which can additionally make an electronic travel title on the same transport means; as well as, as a further addition, an electronic ticket for the fruition of services, public or private open to the public, or events (the device for personal use is named Free Way Device hereinafter and briefly referred to by the term of *Free-way*);
c) a multiplicity of sensors of the spatiotemporal position of the user 3, each one to be installed in correspondence with a respective location or site, fit for detecting the position in space and time of the user (the sensor of the spatiotemporal position of the user is briefly referred to as Position Sensor hereinafter). The Position Sensor can be installed in a mobile site, like in a transport means, e.g. a train, a bus or a ferry-boat, or in a fixed site, as in a station of transport means, e.g. an underground station or an airport. The Position Sensor is intended to operate as an interface between the user and the Data Processing Centre.

The system of this invention operates through a communication system 4, whereto the aforesaid three basic constituting elements respectively have accesses 1'; 2'; 3', which communication system allows them to communicate therebetween in real time and so to realize the aforesaid feature of being interacting.

The so configured system turns out to be an interactive system, by the term of interactive it being meant that the parts that constitute the system itself are able to interact therebetween and/or with the user in real time.

### 1.2. Base Constitution of the Free-way

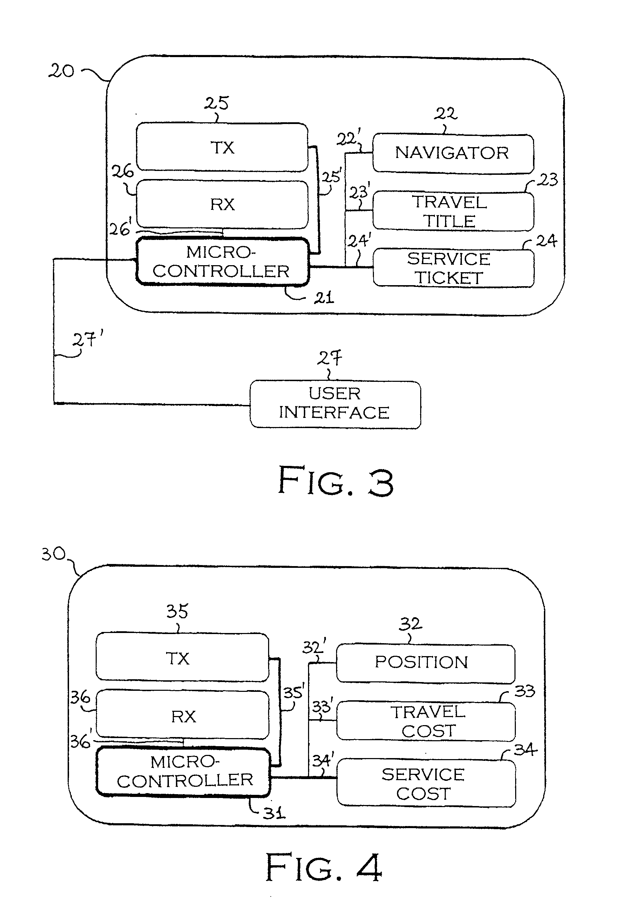

Referring to FIGURE 3, the *Free-way* according to an embodiment is built as a board or circuit chip 20, in the function of an autonomous apparatus. The *Free-way* board includes as its basic operative core a control unit including a microcontroller 21 in functional communication 22' with a navigator function manager 22; in functional communication 23' with a travel electronic ticket title function manager 23, and in functional communication 24' with a service and event electronic ticket function manager 24. Microcontroller 21 includes a microprocessor central processing unit, of known art and commercially available. The microcontroller, moreover, is equipped with memory means (not shown), in functional communication therewith. The *Free-way* board includes communication means including a transmitter 25 and a receiver 26, in functional communication 25', 26' with microcontroller 21. The *Free-way,* moreover, includes a user interface 27 including an alphanumeric keyboard, constituting means for inletting input data into the *Free-way*, and a video for visualizing messages to the user. An electric power supply (not represented) built in the *Free-way* gives the latter energetic autonomy for the portability thereof.

According to an embodiment, the board of the *Free-way* is further equipped with an acoustic signalling device for warning about the happened detection by a Postion Sensor of the passing of the *Free-way* through it, and/or the happened reception of information, of advertising or of the attaining of an offer bonus.

To the board of any *Free-way* is always associated with a User Identification Code (briefly referred to by the acronym UIC hereinafter), which is assigned to the user at the moment of the acquisition of the *Free-way.* The UIC is stored in the memory means. It can include information about the currency support of the user, such as an account curent number, a credit card number, etc.

### 1.3. Base Constitution of the Position Sensor

Referring to FIGURE 4, the Position Sensor includes a circuit board chip 30. The board of the Position Sensor includes as its basic operating core a control assembly including a microcontroller 31 in functional communication 32' with a unit for sending position information 22; in functional communication 33' with a unit for sending travel cost debiting information 33, and in functional communication 34' with a unit for sending service or event debiting information 34. Microcontroller 31 includes a microprocessor central processing unit, of known art and commercially available. The board of the Position Sensor includes communication means including a transmitter 35 and a receiver 36, in functional communication 35', 36' with microcontroller 31. An electric power supply (not shown) gives energetic autonomy to the Position Sensor.

Microcontroller 31 is equipped with memory means. In these memory means position data are stored of the Position Sensor, making a Spatial Code (or SC). Data sensed and transmitted to the DPC and received and transmitted by the DPC to the *Free-way* can be further stored. Microcontroller 31 is further equipped with calendar-clock means (not shown), providing thereto a date and hour signal, and includes means for generating a Temporal Code (TC), bearing current date and hour information, generated based on said date and hour signal.

The Position Sensor can further include an acoustic signalling device for signalling troubles in the operation thereof, and self-diagnostics means which activate the acoustic signalling device on the detection of a trouble in the Position Sensor.

### 2. The Free-way as a Navigator

Having described the base constitution of a system according to this invention, the operation thereof is now described. To this end it is firstly fundamental to classify the user based on the behaviour of the approach to path information, defined above. The user is classified as programmatic or, on the contrary, nonprogrammatic. Herein the user is defined and classified, the behaviour whereof is that of asking for path information anticipatedly. Herein the user is defined and classified the behaviour whereof is that of asking for path information in real time.

Using the *Free-way* as a navigator, this one visualizes on the display all the pieces of information about a path to be effected, asked for to DPC, as e.g. FROM ITALIA/NAPOLI/PIAZZA GARIBALDI/18:15 TO ITALIA/ROMA/PIAZZA DI SPAGNA:

| | COUNTRY | TOWN | STREET | HOUR |
|---|---|---|---|---|
| FROM | ITALY | Napoli | Piazza Garibaldi | 18:15 |
| TO | ITALY | Roma | Piazza di Spagna | |

and received by the DPC, information which, as already mentioned, can indicate path options, the total path time, the number of intermodal switches, the total travel cost relevant to all the various combinations of transport modes:

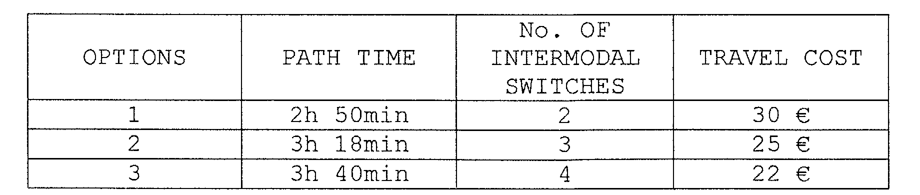

Information messages correspond to the various options, such as:

| -OPTION 1- | | | | |
|---|---|---|---|---|
| No. OF TRANSPORT MEANS TO BE TAKEN | | FROM | TO | HOUR |
| 1st | INTERCITY AD/255 | NAPOLI Stazione Centrale | ROMA Termini | 18:45-19:20 |
| 2nd | - BUS C 155 | ROMA Termini | Piazza di Spagna | 21:10-21:45 |
| | - BUS LINEA ROSSA | | | 21:15-21:55 |
| | - METRO LINEA NERA | | | every 7^{th} min |

Moreover, in the progress of a travel, whenever the user prepares him/herself to pass under a Position Sensor, the *Free-way* can visualize indications of an eventual trouble in the conditions of roads, such as caused by excessive traffic, strikes, malfunctions or accidents, etc., and make indications to be visualized about transport means to be taken as a substitution.

If a programmatic user is dealt with, or a user interested in effecting bookings and receiving the aforesaid pieces of information anticipatedly, this one will be able to ask for/receive them through cellular mobile phone messages, such as SMS/GSM, or EMS (or *Enhanced Messaging Service,* 'enlarged' messages that integrate sounds and black-and-white images to a text), MMS (or *Multimedia Messaging Service,* multimedial messages that integrate music, colour images and videoclips to a text), for the connection to Internet sites, free call numbers, etc., all modalities that allow an immediate connection with DPC.

The user can evaluate all the possible options, arriving at an optimum choice according to parameters dictated by his/her specific exigencies (such as the minimum path time, the least cost, the greatest comfort, etc.). If this optimum choice, corresponding to one of the suggested options, is confirmated at the DPC, when undertaking a travel, the confirmation itself is identified in a request for a signalling of stages of the path and of transport means to be utilized in the progress of the displacement along the path. This signalling is visualized on the display of the *Free-way* at each passage under each one of the Position Sensors distributed along the path, e.g. in correspondence with underground stations, bus stops, railway stations, etc. In the intermediate passages between a switch and another one, the Position Sensor updates the request of the user, based on the remaining path portions to be covered and on the transport means to be utilized. Moreover, the *Free-way* can visualize information for the suppression of transport means runs and/or about the interruption of roads, caused by accidents or strikes, and, therefore, all possible options, in substitution of the other ones.

On the contrary, in the case of a nonprogrammatic user, i.e. interested in requiring/receiving pieces of information about a path to be effected and on a destination to be reached, at the same moment in which he/she prepares him/herself to undertake a travel, or, during a displacement, the *Free-way* is interrogated in proximity of any Position Sensor. In this case too, in the intermediate passages between a switch and another one, the Position Sensor updates the requests of the user, relevant to the various parts of the path to be covered and relevant to the transport means to be utilized.

Moreover, the *Free-way* further can visualize a piece of information about the suppression of transport means runs and/or the interruption of roads, caused e.g. by accidents or strikes, and, therefore, visualize information about the transport means to be taken as an alternative.

The operation of the *Free-way,* therefore, is as follows, in the two depicted cases:
a) Use of the *Free-way* as a Navigator for Non-programmatic User (np) . - Assuming that the user, endowed with a *Free-way,* finds him/herself in proximity of any Position Sensor, one has the following flow of operating stages:
   (i-np) the user fingers on the *Free-way* a destination wheret he/she wants to arrive;
   (ii-np) the *Free-way* transmits the UIC of the user and vthe request for information on the path to be effected at the interested Position Sensor;
   (iii-np) the Position Sensor senses the position of the user in space and time;
   (iv-np) the Position Sensor transmits to the DPC the request for the information that turns out to be associated with the DPC;
   (v-np) the DPC processes all the pieces of information received by the Position Sensor;
   (vi-np) the DPC transmits the information, as well as the data required by the user, updated in rewal time, to the Position Sensor, and
   (vii-np) the Position Sensor transmits the processed data and received by the DPC to the *Free-way;*
b) Use of the *Free-way* as a Navigator for the Programmatic User (p). - Assuming that the user is interested in anticipatedly receiving information on a path to be effected, one has the following flow of operating stages:
   (i-p) the user sends a request for information to the DPC;
   (ii-p) the DPC sends to the user the information required by the latter, through a communication means (such as by presenting it on Internet sites, through telephone messages, cellular mobile phone messages, e.g. SMS or GSM messages, free call numbers, etc.);
   (iii-p) once the travel started, one restarts from stage (i-np) of the flow relevant to the navigator for nonprogrammatic users above.

### 3. The Free-way as a Travel Title (t)

A user, when prepares him/herself to undertake a travel - let us suppose e.g. that the user finds himself in an underground station - and wants to use the *Free-way* as an electronic ticket, has to pass under the nearest Position Sensor among those installed in the station and relevant to the selected transport means. Then one has the following flow of operating stages:
(at the start:)
   (i-t) the *Free-way* transmits the UIC of the user to the interested Position Sensor;
   (ii-t) the Position Sensor associates to the UIC the position of the user in time and space. The spatiotemporal sensing effected by the Position Sensor constitutes an obliteration of the *Free-way* as a travel title;
   (iii-t) The Position Sensor transmits the UIC and the position of the user, as well as a piece of information about the obliteration to the DPC;
   (iv-t) the DPC processes the pieces of information, and
(at the arrival:)
   (v-t) the *Free-way* transmits the UIC to the Position Sensor;
   (vi-t) the Position Sensor associates to the UIC the position of the user in space and time;
   (vii-t) the Position Sensor transmits to the DPC the UIC and the position of the user, and
   (viii-t) the DPC processes all the pieces of spatiotemporal position information acquired in stage
   (vii-t), compares them with those acquired in stage (iii-t) and computes as a consequence the travel cost, based on the charging systems adopted, debiting it to the user, e.g. on an account current (associated to the UIC), or subtracting the debited cost from prepaid credits through rechargeable cards.

As regards the dialogue of the *Free-way* with the user, on the display of the *Free-way* at the passage through a Position Sensor a piece of information about the obliteration is immediately displayed on the display of the *Free-way;* the date, the hour, the basic data of the transport means, the locations corresponding to each sensing, are made to appear for each transport means. One can visualize more sensings or sensing results, and the corresponding travel cost. E.g. for time rates the travel cost is fixed, then it can be visualized indifferently at each detection effected in the span of time provided by that rate; for kilometric rates, the travel cost is visualized when the sensing corresponds to the arrival station, the rate being proportional to the actually covered distances; for the single rates the travel cost is fixed, then it can be visualized indifferently at each effected detection.

As regards the modalities for the debiting of travel costs and the service/event fruition costs, in the moment wherein each user activates his/her own UIC, when acquiring the *Free-way,* his/her position turns out to be defined at the DPC, besides by the UIC itself, also by a bank support reference thereof, such as a post or bank account current number, whereonto to automatically debit the costs.

To allow the respect of the transparency of the debiting procedures, the user can avail him/herself of his/her own UIC as an an access word or password to consult a data bank of the DPC suitably created - e.g. through Internet sites - and verify his/her own debit position, eventually requiring an invoice.

This invention also envisages to provide diminishing prepaid credit means, of the known type of the rechargings for cellular phones.

This invention also envisages that the system set forth can further include control devices. Particularly, in the spirit of this invention, and to the end of speeding up the control stage, limiting the number of escaping users or *free riders,* avoiding that the users exhibit many times, on the request of the service personnel of public transports, their travel title, ensuring a better comfort for users, the system according to this invention can include devices endowed with communication means with the *Free-way* of each user, and able to verify the happened obliteration and, in the specific case of evaders anyhow in possession of a *Free-way*, to transmit to the DPC the amount of the fine to be debited to the escaping users.

### 4. Construction of the Free-way Integrated to a Mobile Cellular Phone

This invention envisages for the *Free-way* taught by it an embodiment integrated/integrateable to a cellular phone. This embodiment foresees a functional insertion of the board of the *Free-way* into a cellular mobile telephone apparatus. The board of the *Free-way* is realized in the format of a board adaptable to mobile phone apparatuses, such as GSM, GPRS, UMTS format. The board includes a control unit performing the functions of *Free-way* as described above, and means for the functional connection with the telecommunication means of a cellular phone and with the means for the interfacing of this one with the user, that is with the alphanumeric keyboard and with the display of the cellular phone. Such a board can be in a form integrated to telephone, i.e. the telephone and the board can be assembled together unitedly into a single bifunctional apparatus; or the board can be constructed as an individual element, and be assembled subsequently onto a cellular phone endowed with means for the functional connection to the board itself and for a stable housing of the same. The cellular phone that contains the *Free-way* card, integrated or added subsequently, finds itself to be increased with an additional, *Free-way* functionality. This invention, otherwise, envisages to endow the cellular phone with a function for accessing the *Free-way* function which can be visualized, identified by a message (e.g.: -FREE-WAY-) and which can be reached through the lists or menus of options normally offered by a cellular phone, such as list PHONE BOOK→MESSAGES→CALLING TONES→FREE-WAY.

The designing of any means for the integration of a *Free-way* board according to this invention in a cellular phone and of the physical means or hardware and of the logical ones, or data processing means, or software to be functionally incorporated into a cellular phone to allow the fruition thereby of the additional *Free-way* functionality fall within the skill of the average man of the relevant art, whereby a detailed description of such means is omitted herein.

### 5. The Free-way as an Electronic Ticket for Accessing Services and Events (se)

This invention envisages the use of the *Free-way* as an instrument for the automatic debiting of the cost of fruition of services/events, or an electronic ticket for accessing services, such as cinemas, theatres, concert halls, museums, etc., as well as events open to the public, such as concerts in the open air, exhibitions, fairs, etc.

In this case the definition is foreseen of sites to be reserved to Position Sensors. Such sites can also be only temporary or occasional, such as particularly for itinerary events. For the occasional sites the connection with the DPC can be not necessary, in that in this case the *Free-way* is not used as a navigator, but only as an electronic ticket. Therefore, this invention envisages that the Position Sensor additionally includes, as illustrated in FIGURE 2, a RAM mass memory 11 having a large capacity, functionally connected 11' to the Position Sensor. Such a mass memory is e.g. on a flexible or floppy disk, on a CD-ROM, on a DVD, etc., removable and connectable to the DPC in a second moment (differently from the cases previously considered, that can be considered as the normal cases of the operation of the system of this invention), a feature with is put into evidence in FIGURE 2 by a dotted line indicating the path of the signal bearing the UIC, SC and TC information. Additional mass memory 11 is then deputed to allow the transmission to DPC of the data detected by the Position Sensor, such as, besides UIC, TC, SC, also transport means data utilized to arrive at the service or event, subsequently, to the end of allowing the computation of the fruition cost, with a particular attention to possible promotion plans, discounts, etc. One has the following flow of operating stages:
(i-se) the *Free-way* transmits the UIC to the Position Sensor;
(ii-se) the Position Sensor associates to the UIC the position of the user (in space and time), or SC and TC; then the flow bifurcates itself into the two following operating modalities:

### 1^{st}) in case the Position Sensor is used as a temporary site, not connected to the DPC:

(iii-se.a) The Position Sensor stores the data acquired in Stages (i-se), (ii-se) above in mass memory 11;
(iv-se.a) transferring to the DPC of the data acquired in Stages (i-se), (ii-se) above;
(v-se.a) the DPC processes the position spatiotemporal information and debits the provided service cost, and eventual discounts, promotions, etc.

### 2^{nd}) in case the Position Sensor is used as a fixed site, connected to the DPC:

(iii.se) the Position Sensor transmits to the DPC the UIC and the spatiotempotal information code;
(iv-se.b) the DPC processes the spatiotemporal information and debits the cost of the provided service, and eventual discounts, promotions, etc.

The designing of any physical and logical means to realize the elements of the system of this invention as set forth above fall within the skill of the average man of the relevant art, whereby a detailed description of such means is omitted therein. In particular, the problems involved in the programming of the data processing means that are a part of the system of this invention can be referred to problems of search on graphs, particularly weighted graphs, of optimum path problems, of multistage decision processes, etc.; all subjects of consolidated development in the art of computer programming and in Operations Research (particularly in Dynamic Programming, as e.g. in the evaluation of traffic on a path). Algorithms and methods for the solution of such problems are diffusely treated in the literature starting from the treatises by *Donald E. Knuth,* The Art of Computer Programming, ADDISON-WESLEY PUBLISHING COMPANY, Reading, Massachusetts, 1973 (Vol. 3, "Sorting and Searching"), and by *Richard Bellmann,* Dynamic Programming, PRINCETON UNIVERSITY PRESS, Princeton, New Jersey, 1957 (see e.g. Chap. VI-VII, "Bottleneck Problems"), wherein the flows of the production processes treated are analogous to the flows of transport means on a path), and subsequently developed, particularly as regards the programs that realize such methods and algorithms in known practical use programming languages, whereby it will fall in the designing skill of the programmer technician to develop programs for the realization of the logical means required by the system of this invention, however the complexity thereof can be high.

This invention has been disclosed referring to specific embodiments thereof, but it is to be expressely understood that additions, omissions and/or variations can be made, without departing from the relevant scope of protection, which remains only defined by the appended claims.

## Claims

1. A system for a navigation on the public transport network, including in combination:
• a Data Processing Centre, including data processing means and means for receiving/emitting signals;
• a multiplicity of personal use devices or *Free-ways,* including means for receiving/emitting signals; control means, equipped with data storing means; means for displaying messages; means for inputting data on the part of a user of the system, and energy autonomy means;
• a multiplicity of Position Sensors, including means for receiving/emitting signals; control means, equipped with data storing means; means for feeding power supply; intended to the sensing of the spatiotemporal position of a user on the public transport network;
• said Data Processing Centre including storing means which store a representation of the public transport network and the time-tables of the public transport means that serve it, and said data processing means thereof being programmed to process path information;
• each one of said *Free-ways* storing, in said storing means thereof, a User Identification Code which identifies it univocally;
• each one of said Position Sensors storing in said storing means thereof space position information, and being endowed with calendar-clock means providing time position information.

2. The system according to Claim 1, wherein said data processing means of said Data Processing Center are further programmed to compute and debit travel or service costs.

3. The system according to Claim 2, wherein said *Free-ways* and said Position Sensors are further endowed with complementary means for the obliteration of a *Free-way* at the passage through a Position Sensor.

4. The system according to Claim 3 further including control devices including means for the verification of the obliteration of the *Free-ways.*

5. A cellular phone including, in functional communication therewith, *Free-way* control means, and means for accessing and using a *Free-way* function, managed by said control means, to operate as a *Free-way* device for personal use for the system according to anyone of the preceding claims.

6. A circuit board including *Free-way* control means and means for the functional connection to a cellular phone.
